(19) **Europäisches Patentamt / European Patent Office / Office européen des brevets**

(11) **EP 1 962 503 A1**

(12) **EUROPEAN PATENT APPLICATION**

(43) Date of publication:
**27.08.2008 Bulletin 2008/35**

(21) Application number: **08002937.4**

(22) Date of filing: **18.02.2008**

(51) Int Cl.:
*H04N 5/74* (2006.01)       *H01L 27/32* (2006.01)
*H04N 9/04* (2006.01)       *H04N 9/31* (2006.01)
*G09G 3/34* (2006.01)

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **22.02.2007 GB 0703472**

(71) Applicant: **Forth Dimension Displays Ltd.**
**Daigety Bay**
**Dunfermline, Fife**
**KY11 9NB Scotland (GB)**

(72) Inventors:
• **Holmes, Paul**
**Fife  KY11 9FH (GB)**
• **Dewar, Calum**
**Fife  KY12 0GA (GB)**

(74) Representative: **Muttock, Neil John**
**QED Intellectual Property Limited**
**Harrow Exchange, 2 Gayton Road**
**Middlesex Harrow HA1 2XU (GB)**

(54) **Colour image displays**

(57)    A method of producing an image, comprises the steps of providing a beam of light comprising at least three colours in sequence during a frame period, the beam comprising a pure colour period for each colour and two or more transition periods when the beam of light changes from one colour to the next colour, and of using a modulating device so that temporal subdivisions of the beam of light are either directed to form the image or not used, accepting a image signal input including intensity values ranging from a minimum value to a maximum value for each colour, determining the total intensity of each colour from the summation of the whole of the pure colour period and the respective component from the summation of the transition periods, weighting the range of intensity values of the image signal input to the total intensity for each colour, and causing the modulating device to use the beam of light from all the transition periods when the image signal intensity value corresponds to a value between the whole of the pure colour period and the total intensity period. The length of the transition periods can be longer than the actual time taken for one pure colour to change to the next pure colour, such that the white point for sum of all transitions has the same chromaticity as the white point from normal data.

*Figure 1*

EP 1 962 503 A1

**Description**

The present invention relates to colour image displays.

Modem digital display systems typically create colour images by mixing the light of three primary colours, red, green and blue. The three primary colours may be mixed by displaying each colour simultaneously or superimposed, or by displaying each colour in turn. Providing each colour is displayed quickly enough in turn the human eye perceives the three colours as a single mixed colour.

This may be achieved through illuminating a spatial light modulator (SLM) such as a liquid crystal array or a micromirror display with each primary colour in turn, generating the primary colours from a rotating light wheel. The colour wheel comprises red, green and blue filters, so that when white light is directed upon the colour wheel, red, green and blue components of the white light are directed in turn towards the modulating device.

Although called a colour wheel, other forms of filter such as a cylinder or a hexagon can be used, and the filters may separate each primary colour in turn either by reflecting or transmitting. Some colour wheels include additional, non-primary colours, and/or clear areas that transmit white light in addition to filtered colour.

In order for the displayed image to be as bright as possible, it is desirable to illuminate the modulating device for as much time as possible. For this reason, one or more of the neighbouring colour filters of the colour wheel often directly abut each other each other with no black boundary between them. Since the beam of white light directed at the colour wheel has a finite cross section with a leading edge and a trailing edge, from the time when the leading edge crosses a boundary between two neighbouring colour filter to the time the trailing edge crosses the boundary, the directed from the colour wheel to the modulating means is composed of two primary colours. Therefore if a primary colour filter has one or two abutting boundaries with the other two primary colours, that image or images for that colour will not be composed purely of that primary colour component will include one or both the other primary colours. This will affect the apparent colour perceived by a viewer, so that the displayed colour does not match that of the colour of the input signal.

US6445505 (Morgan) shows a colour wheel having red, green and blue filters, and a clear portion which transmits white light without any filtering. The colour and intensity of each pixel is represented by assigning a number of bits to the length of time the modulating device is illuminated by red, blue, green and white light. In Morgan, the time taken for a light beam to cross the boundary between two colours is divided into two parts, the first part composed chiefly of the first colour with a smaller amount of the second colour, and the second part composed chiefly of the second colour with a smaller amount of the first colour (considering here white to be a colour). Each such part is considered to count as a 'white bit', so that the white bits produced by the white section of the colour wheel can be reduced and the white bit capability (and brightness of the image) is increased.

Of course, the light from the boundaries between colours is not white, and counting these boundary light bits as white bits can lead to colour and intensity artefacts. To combat this, the eight different types of boundary bits are randomly distributed across the display, in order that the effect will be perceived as if white bits had been used. The use of the different types of boundary bits is also varied temporally. However, the colour resolution of the display is reduced by the use of these boundary bits.

An object of the present invention is to increase the use of light in the colour wheel whilst minimising any colour and/or intensity artefacts.

According to the present invention there is provided a method of producing an image, comprising the steps of:

providing a beam of light comprising at least two colours in sequence during a frame period, comprising a pure colour period for each colour and a transition period when the beam of light changes from one colour to the next colour,

using a modulating device so that temporal subdivisions of the beam of light are either directed to form the image or not used

accepting a image signal input including intensity values ranging from a minimum value to a maximum value for each colour

determining the total intensity of each colour from the summation of the whole of the pure colour period and the respective component from the transition period or periods

weighting the range of intensity values of the image signal input to the total intensity for each colour

and causing the modulating device to use the beam of light from the transition period when the image signal intensity value corresponds to a value between the whole of the pure colour period and the total intensity period.

The present invention, in contrast with US6445505 (Morgan), does not divide each boundary period into parts.

Furthermore, the present invention does not use separate data bits for each of the boundary periods. Instead, all of the boundary periods in a complete cycle of the colour wheel are treated as one composite white area. A single bit plane of data is used to control the SLM during this composite white area. This has the advantage of simplicity, and provides immunity against small amounts of jitter in the colour wheel phase.

A beam of white light is directed onto a colour wheel comprising red, green and blue filters, and a dark area that does not transmit light. The transmitted light then falls on a modulating device comprising an array of pixels which either allow the light falling on that pixel which either allows or does not allow the light falling on it to form part of the image.

An embodiment of the invention will now be described, with reference to drawings, of which

Figure 1 shows colour intensity values and time periods of the system

Figure 2 shows further colour intensity values and time periods of another aspect of the system

Figure 3 shows a graphical representation of input and output signals of the system

Figure 4 shows another graphical representation of input and output signals of the system.

Each pixel of a colour image frame is represented by a bit value for each component colour, for example 24 bits per pixel allows a graded intensity or bit value of 0-255 for each primary colour. The pixel may therefore be switched on or 'white' so that, in the case of an LCD display, each primary colour is reflected for a time period corresponding to its bit value and reflected to contribute to that pixel's colour and brightness. The phrases 'turning the pixel to white' and 'turning the pixel to black' are used in the art to signify that the pixel has been turned on or off respectively (i.e. reflective and non-reflective in a reflective type modulating device), and this terminology will be employed hereafter.

The dark area of the colour wheel allows a period for DC charge balancing to be carried out on the LCD device.

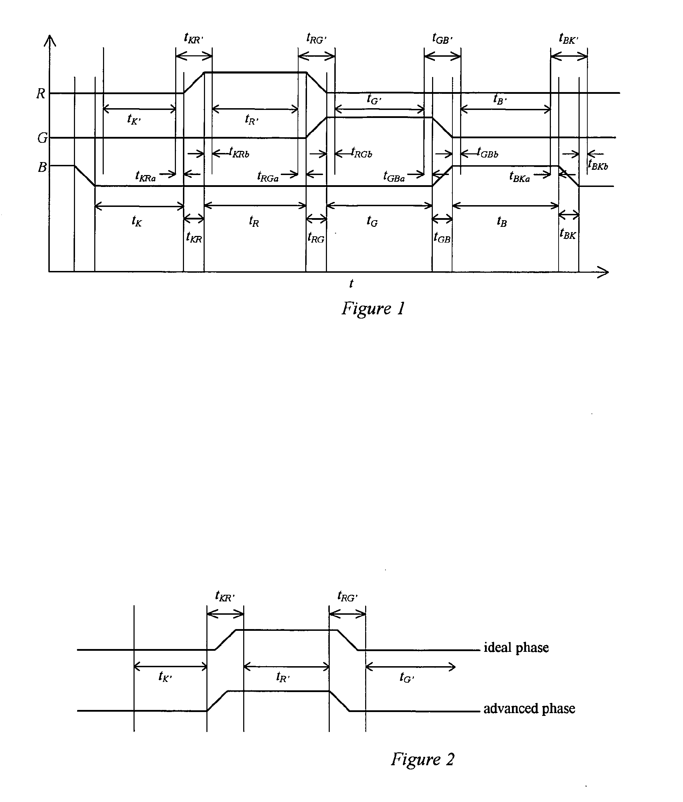

Referring to figure 1, for each revolution of the colour wheel, the output includes time periods $t_K$, $t_R$, $t_G$ and $t_B$, where light beam falls completely within the black, red, green and blue sectors and the colour state is pure and the intensity is constant. Between each of these periods, there are shorter time periods $t_{KR}$, $t_{RG}$, $t_{GB}$ and $t_{BK}$ where the light beam crosses the boundary between the black and red sectors, the red and green sectors, and the green and blue sectors and the blue and black sectors respectively. The red (R), green (G) and blue (B) levels shown here illustrate the rise and fall and that colour's light intensity between minimum (i.e. no light) and maximum (white beam fully that colour's filter) values.

During $t_{KR}$, $t_{RC}$, $t_{GB}$ and $t_{BK}$, the state of the light transmitted is in transition. In the black-colour transitions $t_{KR}$, and $t_{BK}$, intensity of the output is changing. In the colour-colour transitions $t_{RG}$ and $t_{GB}$, both hue and intensity are changing. The light intensity as a function of time during transitions is shown in figure 1 as a straight line for simplicity of illustration only - the actual waveform will depend upon the details of the illumination optics.

If the effect on the appearance of a pixel if it were to be set to white during all of the periods $t_{KR}$, $t_{RG}$, $t_{GB}$ and $t_{BK}$, instead of being set to black as it is in the current system.

During $t_{KR}$, the light reaching the display will have the same spectrum as it will during $t_R$, (we will call this $S_R$) but the average amount of light per unit time will be lower due to the fact that the spot is partially occluded by the black sector. During the transition, the light intensity as a proportion of that during $t_R$ will follow some curve beginning at 0 and ending at 1. We will denote the mean intensity factor (corresponding to the area under the curve) as $q$. If the curve is near-symmetrical, we would expect $q$ to be close to 0.5, but we do not assume that it will equal that value.

If each transition period is transition period is $t_{tr}$, the integrated light throughput $h_{KR}$ is;

$$h_{KR} = t_{tr}qS_R$$

The transition curve during $t_{RG}$ is the same shape as that for $t_{KR}$. During this transition, the mean intensity for green is $q$. Wherever and whenever light is not passing through the green filter, it will be passing through the red one, so the mean red intensity is $1-q$. Integrated light throughput on this transition is therefore;

$$h_{RG} = t_{tr}((1-q)S_R + qS_G)$$

and similarly for the green-blue and blue-black boundaries the integrated light throughput are respectively

$$h_{GB} = t_{tr}((1-q)S_G + qS_B)$$

$$h_{BK} = t_{tr}((1-q)S_B$$

The total light throughput during these to the transition periods is therefore

$$h_{RG} + h_{GB} + h_{BK} = t_{tr}(S_R + S_G + S_B)$$

In order to generate a white light component the spectra from the three filters must be weighted to account for the amplitudes and wavelengths transmitted by each filter, expressed as a pure-colour time, $t_R$, $t_G$ and $t_B$ for the system. The total light throughput during the transition periods, will be an unweighted mean of the spectra, which will not be the same as that white light generated by the system using light transmitted purely from each filter in turn unless the three coloured sectors are equally sized. Uncorrected, this could lead to a chromatic shading artefact at the point in a fade where the transition bit changes state.

As previously described, the operation of the modulating device and the colour wheel is synchronised so that pixels are correctly switched to black and white when each primary colour is directed at them in order to recreate a full colour image. However, the rotation of the colour wheel may vary and not be precisely in phase with the operation of the modulating device. This phenomenon and its effects is known as 'jitter'. In a system which does not use the light from the colour wheel during the transition periods, the modulating device's pixels may be switched to black either side of each transition period for a sufficient time that the phase difference does not affect the image display. However, in the present system where the transition light is used, any jitter will reduce the strength of red or blue light in the transition sum, depending on whether the colour wheel phase shift is ahead of or behind the modulating device.

Referring to figure 1, longer transition time periods $t_{KR'}$, $t_{RC}$, $t_{GB'}$ and $t_{BK'}$ which extend either side of $t_{KR}$, $t_{RG}$, $t_{GB}$ and $t_{BK}$ may be used, with the periods where no light, or red, green and blue light is applied to the modulating device $t_{K'}$, $t_{R'}$, $t_{G'}$, and $t_{B'}$ being correspondingly shorter. Each extended transition time is derived by adding pre- and post-extension periods, so for example;

$$t_{KR'} = t_{KRa} + t_{KR} + t_{KRb}$$

The light throughputs for these new transition periods will be

$$h_{KR'} = t_{tr}qS_R + t_{KRb}S_R$$

$$h_{RG'} = t_{RGa}S_R + t_{tr}(1-q)S_R + t_{tr}qS_G + t_{RGb}S_G$$

$$h_{GB'} = t_{GBa}S_G + t_{tr}(1-q)S_G + t_{tr}qS_B + t_{GBb}S_B$$

$$h_{BK'} = t_{BKa}S_B + t_{tr}(1-q)S_B$$

The total red component from these four transition period light throughputs (i.e. summing the red component terms that appear in the expressions for $h_{KR'}$ and $h_{RG'}$) is therefore

$$h_{TR} = (t_{tr} + t_{KRb} + t_{RGa})S_R$$

and similarly for the green and blue components

$$h_{TR} = (t_{tr} + t_{RGb} + t_{GBa})S_G$$

$$h_{TG} = (t_{tr} + t_{GBb} + t_{BKa})S_B$$

The spectra of the summed transition bit is therefore

$$h_{KR'} + h_{RG'} + h_{GB'} + h_{BK'} = (t_{tr}+t_{KRb}+t_{RGa})S_R + (t_{tr}+t_{RGb}+t_{GBa})S_G +$$
$$(t_{tr}+t_{GBb}+t_{BKa})S_B$$

The white point for normal data (falling in the time periods $t_{R'}$, $t_{G'}$ and $t_{B}$) is determined by the spectra from the three filters weighted in proportion to the colour times $t_{R'}$, $t_{G'}$ and $t_{B'}$. The summed white point of the transition periods is a weighted mean of the spectra, and can be made the same as for the normal data by ensuring the ratios of the normal time periods and the ratios of the transition time periods are equivalent;

$$t_{R'} : t_{G'} : t_{B'} : : (t_{tr} + t_{KRb} + t_{RGa}) : (t_{tr} + t_{RGb} + t_{GBa}) : (t_{tr} + t_{GBb} + t_{BKa})$$

That is, by adjusting the extension periods the white balance of the transition bit can be matched to the normal data and chromatic shading artefacts are avoided.

Referring to figure 2, the upper signal labelled ideal phase shows a red light output produced by a colour wheel that is perfected synchronised with the modulating device. The lower signal labelled advanced phase shows a red light output produced by a colour wheel that is ahead of the modulating device by a time period $\Delta t$. It will be seen that the red throughput in period $t_{KR'}$ is increased and that in period $t_{RG'}$ is reduced. The red throughput in $t_{R'}$, during which the red data bits are rendered, is unaffected, as the light function is flat in that region. Furthermore, since the entire red pulse (including transitions) has not changed in size, the increase in red throughput in $t_{KR'}$ must be matched exactly by the decrease in red throughput in $t_{RG'}$. If the same bit data is used in $t_{KR'}$ and $t_{RG'}$, the red throughput of that bit will not be affected by the jitter provided that the phase shift of the colour wheel does not exceed the extensions of the transition time periods, that is;

$$-t_{KRa} \leq \Delta t \leq t_{KRb}$$

and

$$-t_{RGa} \leq \Delta t \leq t_{RGb}$$

Similarly, if the same bit data is $t_{KR'}$ and $t_{RG'}$ is also used in $t_{GB'}$ and $t_{BK'}$, then provided that the conditions

$$-t_{GBa} \leq \Delta t \leq t_{GBb}$$

and

$$-t_{BKa} \leq \Delta t \leq t_{BKb}$$

are also met, the image will not be affected by the jitter.

As previously discussed, each primary colour has a bit value 0-255. The highest level of red (level 255) will have a total duration of $t_{R'}$, all fully contained within the red sector, so that a single unit of red will have throughput given by

$$h_R = t_{R'} S_R / 255$$

Since the red weighting for the transition bit is $h_{TR} = (t_{tr} + t_{KRb} + t_{RGa}) S_R$ the equivalent red level $l_{TR}$ of the transition bit is

$$l_{TR} = h_{TR} / h_R$$
$$= 255(t_{tr} + t_{KRb} + t_{RGa})/t_{R'}$$

Similarly for the green and blue levels

$$l_{TG} = 255(t_{tr} + t_{RGb} + t_{GBa})/t_{G'}$$

$$l_{TB} = 255(t_{tr} + t_{GBb} + t_{BKa})/t_{B'}$$

Processing of the data begins with a comparison of each of the colour channels with its own threshold

$$d_{pR} = \max(g_R d_{inR} - l_{TR}, 0)$$

$$d_{pG} = \max(g_G d_{inG} - l_{TG}, 0)$$

$$d_{pB} = \max(g_B d_{inB} - l_{TB}, 0)$$

$$d_{pMin} = \min(d_{pR}, d_{pG}, d_{pB})$$

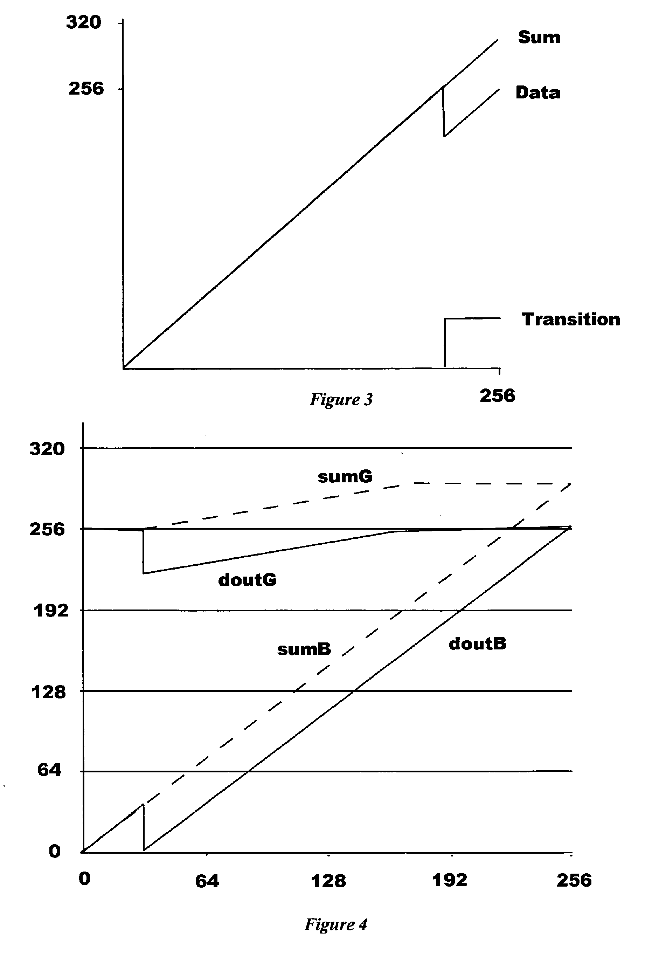

Referring to figure 3, a grey scale in which just one colour channel (say red) is shown. The value $l_{TR}$ has been set at 45. Looking first at the colour channel data, output values have been scaled by a factor $g_{aR}$ given by

$$g_R = (255 + l_{TR})/255 \approx 1.176$$

$$g_{aR} = 1 + d_{pMin}(g_G - 1)/255$$

to give us a scaled value $d_{sR}$

$$d_{sR} = g_{aR}d_{inR}$$

Equivalent values are also derived for the other two channels.

There are situations when one colour channel is much brighter than the others. In order for red output to climb above 255, the transition bit must be turned on when $d_{sR}$ exceeds 255; there are other situations where it could be turned on. The transition bit can be turned on whenever $d_{sR}$ is at least as large as $l_{TR}$, and the red data decremented by $l_{TR}$ to maintain a smooth red response. Any residual error in level matching is less visible in a high-intensity background, so turning the transition bit on at such a low level is not always desirable.

It can be said that turning on the transition bit is desirable ($T_d$) when any data channel exceeds 255

$$T_d = (d_{sR} > 255) \vee (d_{sG} > 255) \vee (d_{sB} > 255)$$

and permissible ($Tp$) when all data channels exceed their transition bit equivalents

$$T_p = (d_{sR} \geq l_{TR}) \wedge (d_{sG} \geq l_{TG}) \wedge (d_{sB} \geq l_{TB})$$

Where it is necessary to minimize the visibility of any mismatches, in particular for demonstration and production, a 'cautious' approach will turn on the transition bit where it is both permissible and desirable. An 'eager' approach, where the transition bit is turned on whenever it is permissible will make mismatches, where they exist, maximally visible, but may be advantageously used during system set-up while parameters are being tuned. In the cautious approach we define

$$T = T_d \wedge T_p$$

and in the alternative, eager, approach we define

$$T = T_p$$

If $T$ is true, the transition bit will be switched on, otherwise it will be switched off.

If the scaled data for one channel (say, green) exceeds 255, but the transition bit cannot be turned because one of the other channels (say, blue) is too low, then the red channel must be limited or clipped to no more than 255. A discontinuity would be produced in a fade if the clipping or red were to be suddenly removed when the blue channel changed from just below $l_{TB}$ to so clipping must is phased out gradually. This will be called 'soft clipping'.

To achieve soft clipping, high threshold parameters $l_{HR}$, $l_{HG}$ and $l_{HB}$ are defined for the three channels. From these, weighting factors $w_R$, $w_G$ and $w_B$ are calculated;

$$
\begin{aligned}
w_R \quad &= 0 && \text{for } d_{sR} < l_{TR} \\
&= (d_{sR} - l_{TR}) / (l_{HR} - l_{TR}) && \text{for } l_{TR} \leq d_{sR} \leq l_{HR}, \\
&= 1 && \text{for } d_{sR} > l_{TR}
\end{aligned}
$$

and

$$
\begin{aligned}
w_G \quad &= 0 && \text{for } d_{sG} < l_{TG} \\
&= (d_{sG} - l_{TG}) / (l_{HG} - l_{TG}) && \text{for } l_{TG} \leq d_{sG} \leq l_{HG}, \\
&= 1 && \text{for } d_{sG} > l_{TG}
\end{aligned}
$$

and

$$
\begin{aligned}
w_B \quad &= 0 && \text{for } d_{sB} < l_{TB} \\
&= (d_{sB} - l_{TB}) / (l_{HB} - l_{TB}) && \text{for } l_{TB} \leq d_{sB} \leq l_{HB}, \\
&= 1 \cdot && \text{for } d_{sB} > l_{TB}
\end{aligned}
$$

and

A final weighting factor $w_{min}$ is simply the minimum of the other three:

$$
w_{min} = \min(w_R, w_G, w_B)
$$

Considering two potential output values for the red channel, a first value, $a_R$, is to be used when the transition bit is switched off, and a second, $b_R$, is to be used when the transition bit is on;

$$
a_R = \min(d_{sR}, 255)
$$

$$
b_R = d_{sR} \, w_{min} + a_R \, (1 - w_{min}) - l_{TR}
$$

The final output value for the red data channel is

$d_{outR} = a_R$   when $T$ is false, i.e. when the transition bit is off, and

$d_{outR} = b_R$   otherwise.

Equivalent values $a_G$, $b_G$, $d_{outG}$, $a_B$, $b_B$ and $d_{outB}$ are computed in the same way for the other two channels.

Referring to figure 4, the summed green and blue outputs are represented by dotted lines labelled sumG and sumB respectively, whilst the green and blue components from the pure sectors of the colour wheel (i.e. without the transitional bit) are represented by full lines labelled doutG and doutB respectively (the red channel is not shown in this figure, but follows the same path as green outputs). In this example, the total output fades from pure yellow (255, 255, 0) at the left of the graph to white (255, 255, 255) at the right. Implementing the soft clipping strategy described above, the transition bit is turned on early in the fade (as soon as blue reaches $I_{TB}$), but the green channel is adjusted downwards to avoid a discontinuity. As blue increases, green is gradually brought up from its clipped level to its full scaled value $d_{sG}$.

Although the system described here uses a colour wheel having three colour sectors and a black sector, the concepts described here could be implemented in other systems using a colour wheel with different arrangements and/or numbers of colours. Further, although each colour channel here is defined using an 8 bit intensity value, the system could be adapted to other digital colour representations.

## Claims

1.   A method of producing an image, comprising the steps of:

providing a beam of light comprising at least three colours in sequence during a frame period, comprising a pure colour period for each colour and two or more transition periods when the beam of light changes from one colour to the next colour,

using a modulating device so that temporal subdivisions of the beam of light are either directed to form the image or not used

accepting a image signal input including intensity values ranging from a minimum value to a maximum value for each colour

determining the total intensity of each colour from the summation of the whole of the pure colour period and the respective component from the summation of the transition periods

weighting the range of intensity values of the image signal input to the total intensity for each colour

and causing the modulating device to use the beam of light from all the transition periods when the image signal intensity value corresponds to a value between the whole of the pure colour period and the total intensity period.

2.   A method according to claim 1, wherein the length of the transition periods are longer than the actual time taken for one pure colour to change to the next pure colour, such that the white point for sum of all transitions has the same chromaticity as the white point from normal data.

3.   A method according to claim 1, wherein all transition periods are longer than the actual time taken for one pure colour to change to the next pure colour, such that variations in the start time and end time as one colour changes to the next colour are accommodated.

4.   A method according to any previous claim, wherein the modulating device is caused to use the beam of light from the transition period but the pure colour period is reduced so that summation of the pure colour period used and the respective component from the transition period or periods is less than the corresponding image signal intensity value.

*Figure 1*

*Figure 2*

*Figure 3*

*Figure 4*

**European Patent Office**

## EUROPEAN SEARCH REPORT

Application Number

EP 08 00 2937

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 7 046 221 B1 (MALZBENDER RAINER M [US]) 16 May 2006 (2006-05-16)<br>* abstract; claims 1,6; figures 1-14 *<br>* column 1, line 37 - column 2, line 8 *<br>* column 2, line 46 - column 5, line 5 *<br>* column 7, line 10 - column 7, line 16 *<br>* column 10, line 28 - column 10, line 48 *<br>* column 12, line 36 - column 13, line 40 *<br>----- | 1-4 | INV.<br>H04N5/74<br>H01L27/32<br>H04N9/04<br>H04N9/31<br>G09G3/34 |
| X | US 2005/276471 A1 (SHIN YOON-CHEOL [KR] ET AL) 15 December 2005 (2005-12-15)<br>* abstract; figures 1-9 *<br>* page 1, paragraph 15 - page 3, paragraph 38 *<br>----- | 1 | |
| | | | TECHNICAL FIELDS SEARCHED (IPC)<br><br>H04N<br>H01L<br>G09G |

The present search report has been drawn up for all claims

| Place of search | Date of completion of the search | Examiner |
|---|---|---|
| Munich | 30 June 2008 | Dolezel, Tomás |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT**
**ON EUROPEAN PATENT APPLICATION NO.**                    EP 08 00 2937

This annex lists the patent family members relating to the patent documents cited in the above-mentioned European search report.
The members are as contained in the European Patent Office EDP file on
The European Patent Office is in no way liable for these particulars which are merely given for the purpose of information.

30-06-2008

| Patent document cited in search report | | Publication date | Patent family member(s) | | Publication date |
|---|---|---|---|---|---|
| US 7046221 | B1 | 16-05-2006 | US | 2006197727 A1 | 07-09-2006 |
| US 2005276471 | A1 | 15-12-2005 | BR | PI0502001 A | 30-01-2007 |
| | | | CN | 1707600 A | 14-12-2005 |
| | | | JP | 3990413 B2 | 10-10-2007 |
| | | | JP | 2005354707 A | 22-12-2005 |
| | | | KR | 20050116998 A | 14-12-2005 |
| | | | NL | 1029223 C2 | 11-03-2008 |
| | | | NL | 1029223 A1 | 12-12-2005 |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6445505 B, Morgan